(19) Europäisches Patentamt
European Patent Office
Office européen des brevets

(11) EP 2 620 939 A1

(12) EUROPEAN PATENT APPLICATION

(43) Date of publication:
31.07.2013 Bulletin 2013/31

(51) Int Cl.:
*G10L 15/26* (2006.01)

(21) Application number: 13152708.7

(22) Date of filing: 25.01.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 29.01.2012 CN 201210020265
16.02.2012 US 201213398263

(71) Applicant: Tektronix, Inc.
Beaverton,
Oregon 97077-0001 (US)

(72) Inventors:
• Zhong, Jihao
  Plano, TX 75025 (US)
• Plante, Sylvain
  Richardson, TX 75082 (US)
• Chan, Chunchun Jonina
  Plano, TX 75074 (US)
• Xie, Jiping
  Shangai (HK)

(74) Representative: Hofstetter, Schurack & Partner
Patent- und Rechtsanwaltskanzlei
Partnerschaft
Balanstrasse 57
81541 München (DE)

(54) **Speech processing in telecommunication networks**

(57) Systems and methods for speech processing in telecommunication networks are described. In some embodiments, a method may include receiving speech transmitted over a network, causing the speech to be converted to text, and identifying the speech as predetermined speech in response to the text matching a stored text associated with the predetermined speech. The stored text may have been obtained, for example, by subjecting the predetermined speech to a network impairment condition. The method may further include identifying terms within the text that match terms within the stored text (e.g., despite not being identical to each other), calculating a score between the text and the stored text, and determining that the text matches the stored text in response to the score meeting a threshold value. In some cases, the method may also identify one of a plurality of speeches based on a selected one of a plurality of stored texts.

FIG. 6

**Description**

**CROSS-REFERENCE TO RELATED APPLICATION(S)**

This application claims priority to Chinese Patent Application No. 201210020265.9, which is titled "Speech Processing in Telecommunication Networks" and was filed on January 29, 2012 in the State Intellectual Property Office (SIPO), P.R. China, the disclosure of which is hereby incorporated by reference herein in its entirety.

**TECHNICAL FIELD**

This specification is directed, in general, to speech processing, and, more particularly, to systems and methods for processing speech in telecommunication networks.

**BACKGROUND**

There are various situations where verbal sentences or cues may be transmitted between two endpoints of a telecommunications network. Examples of telecommunication equipment configured to transmit audio or speech signals include, but are not limited to, Interactive Voice Response (IVR) servers and automated announcement systems. Furthermore, there are instances where a carrier, operator, or other entity may wish to validate and/or identify the audio played by such equipment.

For sake of illustration, a bank may desire test whether a proper greeting message is being provided to inbound callers depending upon the time of the call. In that case, the bank may need to verify, for example, that a first automatic message (e.g., "Thank you for calling; please select from the following menu options...") is being played when a phone call is received during business hours, and that a different message (e.g., "Our office hours are Monday to Friday from 9am to 4pm; please call back during that time...") is played when the call is received outside of those hours.

As the inventors hereof have recognized, however, these verbal sentences and cues routinely travel across different types of network (*e.g.*, a computer network and a wireless telephone network). Also, networks typically operate under different and changing impairments, conditions, outages, etc., thus inadvertently altering the transmitted audio signals. In these types of environments, an audio signal that would otherwise be recognized under normal conditions may become entirely unidentifiable. As such, the inventors hereof have identified, among other things, a need to validate and/or identify audio signals, including, for example, speech signals that are played by different network equipment subject to various network conditions and/or impairments.

**SUMMARY**

Embodiments of systems and methods for processing speech in telecommunication networks are described herein. In an illustrative, non-limiting embodiment, a method may include receiving speech transmitted over a network, causing the speech to be converted to text, and identifying the speech as predetermined speech in response to the text matching a stored text associated with the predetermined speech. The stored text may be obtained, for example, by subjecting the predetermined speech to a network impairment condition.

In some implementations, the speech may include a signal generated by an Interactive Voice Response (IVR) system. Additionally or alternatively, the speech may include an audio command provided by a user remotely located with respect to the one or more computer systems, the audio command configured to control the one or more computer systems. Moreover, the network impairment condition may include at least one of: noise, packet loss, delay, jitter, congestion, low-bandwidth encoding, or low-bandwidth decoding.

In some embodiments, identifying the speech as the predetermined speech may include identifying one or more terms within the text that match one or more terms within the stored text, calculating a matching score between the text and the stored text based, at least in part, upon the identification of the one or more terms, and determining that the text matches the stored text in response to the matching score meeting a threshold value. Further, identifying the one or more terms within the text that match the one or more terms within the stored text may include applying fuzzy logic to terms in the text and in the stored text. In some cases, applying the fuzzy logic may include comparing a first term in the text against a second term in the stored text without regard for an ordering of terms in the first or second texts. Additionally or alternatively, applying the fuzzy logic may include determining that any term in the text matches, at most, one other term in the stored text.

In some implementations, the method may include determining that a first term in the text and a second term in the stored text are a match, despite not being identical to each other, in response to: (a) a leading number of characters in the first and second terms matching each other; and (b) a number of unmatched characters in the first and second terms being smaller than a predetermined value. Additionally or alternatively, such a determination may be made in response to: (a) a leading number of characters in the first and second terms matching each other; and (b) the leading number of characters being greater than a predetermined value. Moreover, calculating the matching score between the text and the stored text may include calculating a first sum of a first number of characters of the one or more terms within the text that match the one or more terms within the stored text and a second number of characters of the one or more terms within the stored text that match the one or more terms within the text, calculating a second sum of a total number of characters in the text and the stored text, and dividing the first sum by the second sum.

Prior to identifying the speech signal as the predetermined speech, the method may also include creating a variant speech signal by subjecting the predetermined speech to the network impairment condition and causing the variant speech signal to be converted to variant text. The method may then include storing the variant text as the stored text, the stored text associated with the network impairment condition.

In another illustrative, non-limiting embodiment, a method may include identifying a text resulting from a speech-to-text conversion of a speech signal received over a telecommunications network. The method may also include calculate, for each of a plurality of stored texts, a score that indicates a degree of matching between a given stored text and the received text, each of the plurality of stored texts corresponding to a speech-to-text conversion of a predetermined speech subject to an impairment condition of the telecommunications network. The method may further include selecting a stored text with highest score among the plurality of stored texts as matching the received text.

In yet another illustrative, non-limiting embodiment, a method may include creating a variant speech by subjecting an original speech to an actual or simulated impairment condition of a telecommunications network, transcribing the variant speech signal into a variant text, and storing the variant text. For example, the variant text may be stored in association with an indication of the impairment condition. The method may further include transcribing a speech signal received over a network into text and identifying the speech signal as matching the original speech in response to the text matching the variant text.

In some embodiments, one or more of the methods described herein may be performed by one or more computer systems. In other embodiments, a tangible computer-readable storage medium may have program instructions stored thereon that, upon execution by one or more computer or network monitoring systems, cause the one or more computer systems to perform one or more operations disclosed herein. In yet other embodiments, a system may include at least one processor and a memory coupled to the at least one processor, the memory configured to store program instructions executable by the at least one processor to perform one or more operations disclosed herein.

## BRIEF DESCRIPTION OF THE DRAWINGS

Reference will now be made to the accompanying drawings, wherein:

FIGURE 1 is a block diagram of a speech processing system according to some embodiments.

FIGURE 2 is a block diagram of a speech processing software program according to some embodiments.

FIGURES 3A and 3B are flowcharts of methods of creating variant or expected texts based on network impairment conditions according to some embodiments.

FIGURE 4 is a block diagram of elements stored in a speech-processing database according to some embodiments.

FIGURES 5 and 6 are flowcharts of methods of identifying speech under impaired network conditions according to some embodiments.

FIGURE 7 is a flowchart of a method of identifying a network impairment based on received speech according to some embodiments.

FIGURE 8 is a block diagram of a computer system configured to implement certain systems and methods described herein according to some embodiments.

While this specification provides several embodiments and illustrative drawings, a person of ordinary skill in the art will recognize that the present specification is not limited only to the embodiments or drawings described. It should be understood that the drawings and detailed description are not intended to limit the specification to the particular form disclosed, but, on the contrary, the intention is to cover all modifications, equivalents and alternatives falling within the spirit and scope of the claims. Also, any headings used herein are for organizational purposes only and are not intended to limit the scope of the description. As used herein, the word "may" is meant to convey a permissive sense (i.e., meaning "having the potential to"), rather than a mandatory sense (i.e., meaning "must"). Similarly, the words "include," "including," and "includes" mean "including, but not limited to."

## DETAILED DESCRIPTION

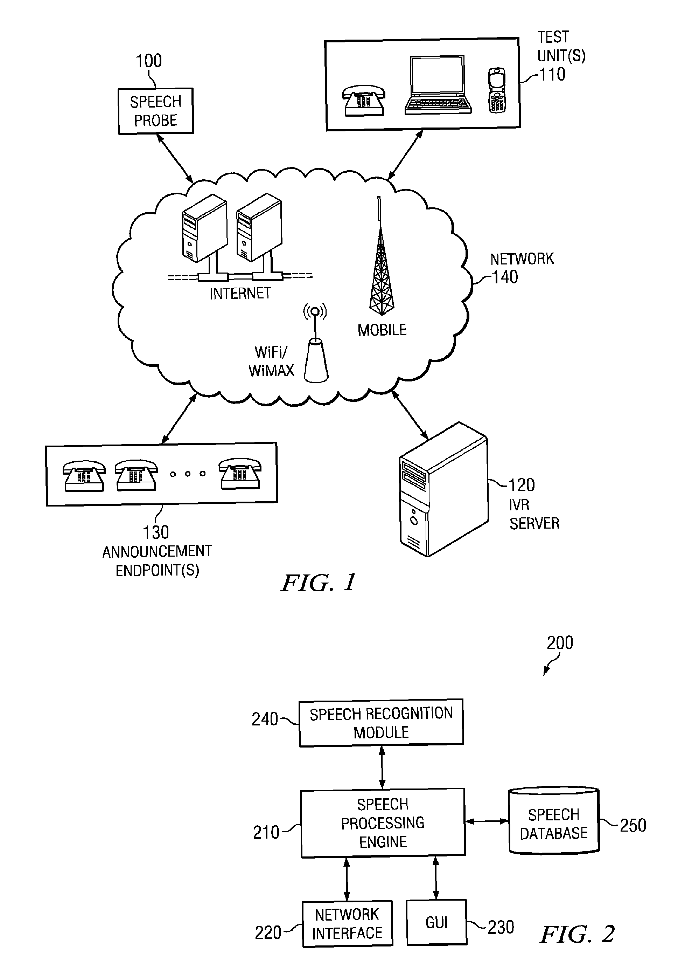

Turning to FIGURE 1, a block diagram of a speech processing system is shown according to some embodiments. As illustrated, speech probe 100 may be connected to network 140 and configured to connect to one or more of test unit(s) 110, IVR server 120, or announcement end point(s) 130. In some embodiments, speech probe 100 may be configured to monitor communications between test unit(s) 110 and IVR server 120 or announcement endpoint(s) 130. In other embodiments, speech probe 100 may be configured to initiate communications with IVR server 120 or announcement endpoint(s) 130. In yet other embodiments, speech probe 100 may be configured to receive one or more commands from test unit(s) 110. For example, in response to receiving the one or more commands, speech probe 100 may initiate, terminate, alter, or otherwise control a network testing process or the like. Protocols used to enable communications taking place in FIGURE 1 may be selected, for instance, based upon the type of content being communicated, the type of network 140, and/or the capabilities of devices 100-130.

Generally speaking, test unit(s) 110 may include a fixed-line telephone, wireless phone, computer system (*e.g.*, a personal computer, laptop computer, tablet computer, etc.), or the like. As such, test unit(s) 110 may allow users to carry out voice communications or to otherwise transmit and/or receive audio signals, for example, to/from speech probe 100, IVR server 120, and/or announcement endpoint(s) 130. IVR server 120 may include a computer system or the like configured to reproduce one or more audio prompts following a predetermined call flow. For example, IVR server 120 may, upon being reached by speech probe 100 or test unit(s) 110, reproduce a first message. After having reproduced the first message and in response to having received a dual-tone multifrequency (DTMF) signal or verbal selection, IVR server 120 may reproduce another audio prompt based on the call flow.

Each of announcement endpoint(s) 130 may include a telephone answering device, system, or subsystem configured to play a given audio message upon being reached by speech probe 100 or test unit(s) 110. In some cases, each of announcement endpoint(s) 130 may be associated with a different telephone number. For example, an announcement management system (not shown) may identify a given audio prompt to be played to a user, and it may then connect the user to a corresponding one of the announcement endpoint(s) 130 by dialing its phone number to actually provide the audio prompt. Network 140 may include any suitable wired or wireless/mobile network including, for example, computer networks, the Internet, Plain Old Telephone Service (POTS) networks, third generation (3G), fourth generation (4G), or Long Term Evolution (LTE) wireless networks, Real-time Transport Protocol (RTP) networks, or any combination thereof. In some embodiments, at least portions of network 140 may implement a Voice-over-IP (VoIP) network or the like.

Speech probe 100 may include a computer system, network monitor, network analyzer, packet sniffer, or the like. In various embodiments, speech probe 100 may implement certain techniques for validating and/or identifying audio signals, including, for example, speech signals that are provided by different network equipment (*e.g.*, test unit(s) 110, IVR server 120, and/or announcement end point(s) 130) subject to various network conditions and/or impairments. As such, various systems and methods described herein may find a wide variety of applications in different fields. These applications may include, among others, announcement recognition, multistage IVR call flow analyzer, audio/video Quality-of-Service (QoS) measurements, synchronization by speech, etc.

For example, in an announcement recognition application, speech probe 100 may call an announcement server or endpoint(s) 130. The destination may play an announcement audio sentence. Once the call is connected, speech probe 100 may listen to the announcement made by the endpoint(s) 130, and it may determine whether or not the announcement matches the expected speech. Examples of expected speech in this case may include, for instance, "the account code you entered is in valid please hang up and try again" (AcctCodeInvalid), "anonymous call rejection is now de activated" (ACRactive command), "anonymous call rejection is active" (ACRDeact command), etc. To evaluate whether there is match, probe 100 may transcribe the audio to text and compare the transcribed text with an expected text corresponding to expected speech.

In a multistage IVR call flow analyzer application, speech probe 100 may call IVR server 120. Similarly as above, the destination may play an audio sentence. Once the call is connected, speech probe 100 may listen to the speech prompt pronounced by IVR system 120 and recognize which of a plurality of announcements is being reproduced to determine which stage it is in the IVR call flow, and then perform an appropriate action (e.g., playback a proper audio response, emit a DTMF tone, measure a voice QoS, etc.). Examples of expected speech in this case may include, for instance, "welcome our airline; for departures please say 'departures,' for arrivals please say 'arrivals,' for help please say 'help'" (greeting), "for international departures please say 'international,' for domestic departures please say 'domestic'" (departures), "for arrivals times, please say the flight number or say 'I don't know'" (arrivals), "if you know you agent's extension number please dial or it now, or please wait for the next available agent" (help), etc.

In an audio/video QoS measurement application, such measurements may be performed in different stages (*e.g.*, Mean Opinion Score (MOS), round trip delay, echo measurement, etc.). Synchronization of starting and stopping times for processing each stage may be effected by the use of speech commands, such as, for example, "start test," "perform MOS measurement," "stop test," etc. Hence, in some cases, a remote user may issue these commands to speech probe 100 from test unit(s) 110. Although this type of testing has traditionally been controlled via DTMF tones, the inventors hereof have recognized that such tones are often blocked or lost when a signal crosses analog/TDM/RTP/ wireless networks. Speech transmission, although subject to degradation due to varying network impairments and conditions, is generally carried across hybrid networks.

It should be understood that the applications outlined above are provided for sake of illustration only. As a person of ordinary skill in the art will recognize in light of this disclosure, the systems and methods described herein may be used in connection with many other applications.

FIGURE 2 is a block diagram of a speech processing software program. In some embodiments, speech processing software 200 may be a software application executable by speech probe 100 of FIGURE 1 to facilitate the validation or identification of speech signals in various applications including, but not limited to, those described above. For example, network interface module 220 may be configured to capture data packets or signals from network 140, including, for example, speech or audio signals. Network interface module 220 may then feed received data and/or signals to speech processing engine 210. As described in more detail below, certain signals and data received, processed, and/or generated by speech processing engine 210 during operation may be stored in speech database 250. Speech processing engine 210 may also interface with speech recognition module 240 (e.g., via Application Program Interface (API) calls or the like), which may include any suitable commercially available or freeware speech recognition software. Graphical User Interface (GUI) 230 may allow a user to inspect speech database 250, modify parameters used by speech processing engine 210, and more generally control various aspects of the operation of speech processing software 200.

Database 250 may include any suitable type of application and/or data structure that may be configured as a persistent data repository. For example, database 250 may be configured as a relational database that includes one or more tables of columns and rows and that may be searched or queried according to a query language, such as a version of Structured Query Language (SQL). Alternatively, database 250 may be configured as a structured data store that includes data records formatted according to a markup language, such as a version of extensible Markup Language (XML). In some embodiments, database 250 may be implemented using one or more arbitrarily or minimally structured data files managed and accessible through a suitable program. Further, database 250 may include a database management system (DBMS) configured to manage the creation, maintenance, and use of database 250.

In various embodiments, the modules shown in FIG. 2 may represent sets of software routines, logic functions, and/or data structures that are configured to perform specified operations. Although these modules are shown as distinct logical blocks, in other embodiments at least some of the operations performed by these modules may be combined in to fewer blocks. Conversely, any given one of modules 210-250 may be implemented such that its operations are divided among two or more logical blocks. Moreover, although shown with a particular configuration, in other embodiments these various modules may be rearranged in other suitable ways.

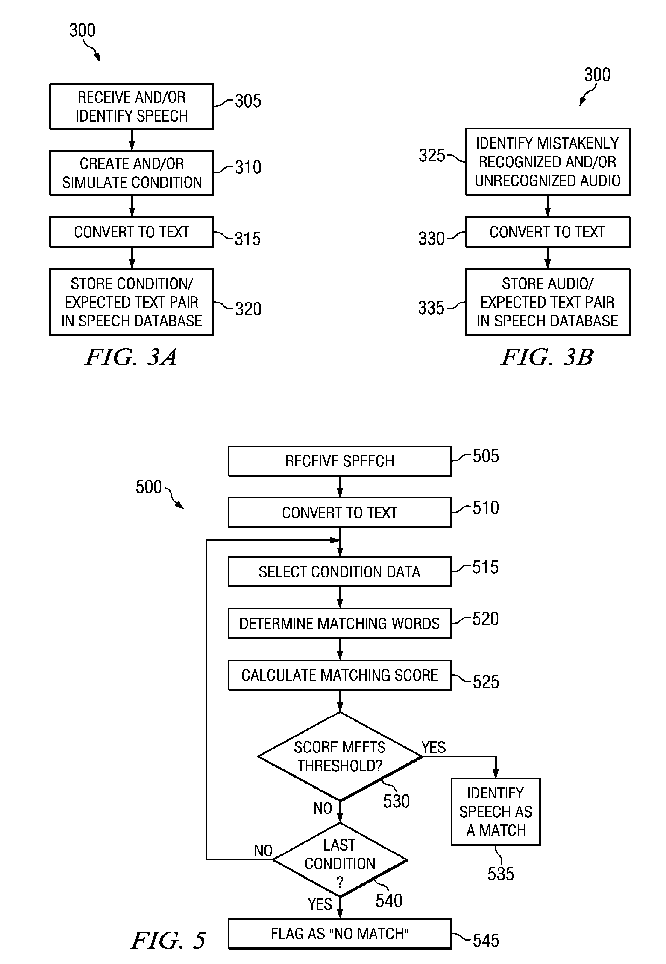

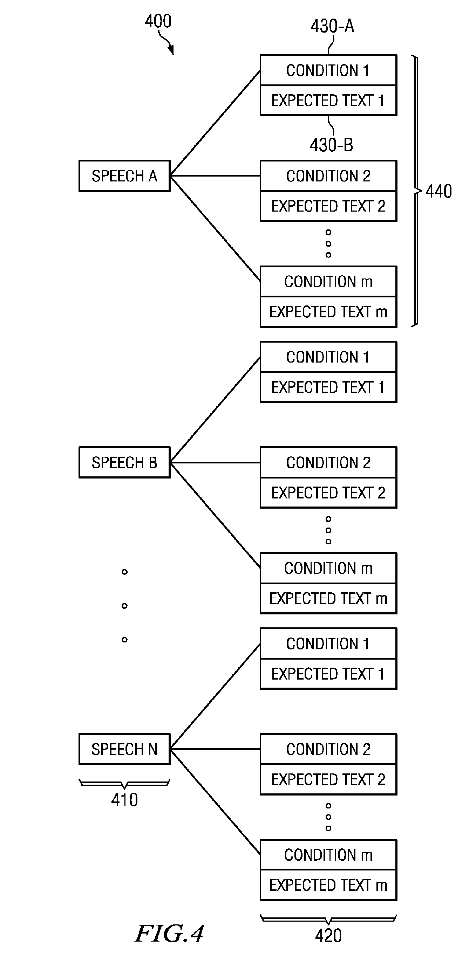

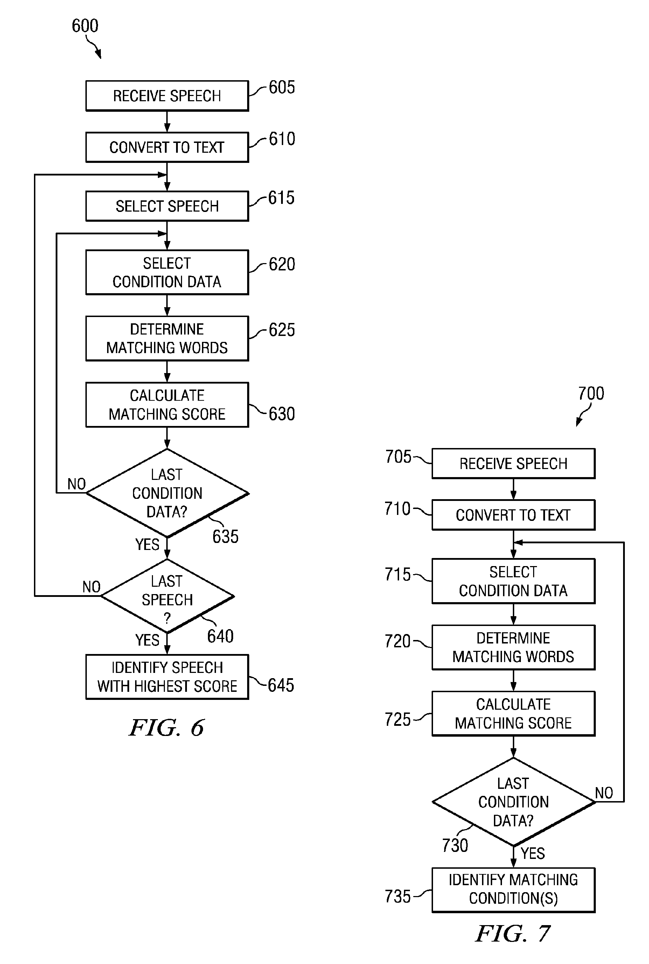

Still referring to FIGURE 2, speech processing engine 210 may be configured to perform speech calibration operations as described in FIGURES 3A and 3B. As a result, speech processing engine 210 may create and store transcribed texts of speech signals subject to network impairments in database 250, as shown in FIGURE 4. Then, upon receiving a speech signal, speech processing engine 210 may use these transcribed texts to identify the speech signal as matching a predetermined speech subject to a particular network impairment, as described in FIGURES 5 and 6. Additionally or alternatively, speech processing engine 210 may facilitate the diagnostic of particular network impairment (s) based on the identified speech, as depicted in FIGURE 7.

In some embodiments, prior to speech identification, speech processing engine 210 may perform a speech calibration procedure or the like. In that regard, FIGURE 3A is a flowchart of a method of performing speech calibration based on simulated network impairment conditions. At block 305, method 300 may receive and/or identify a speech or audio signal. At block 310, method 300 may create and/or simulate a network impairment condition(s). Examples of such conditions include, but are not limited to, noise, packet loss, delay, jitter, congestion, low-bandwidth encoding, low-bandwidth decoding, or combinations thereof. For instance, speech processing engine 210 may pass a time or frequency-domain version of the speech or audio signal through a filter or transform that simulates a corresponding network impairment condition. Additionally or alternatively, speech processing engine 210 may add a signal (in the time or frequency-domain) to the speech or audio signal to simulate the network impairment. Upon being processed by block 310, the received speech or audio signal may be referred to as an impaired or variant signal.

At block 315, method 300 may convert the variant speech or audio signal to text. For example, speech processing engine 210 may transmit the variant signal to speech recognition module 240 and receive recognized text in response. Because the text results from the processing of variant speech (*i.e.,* speech subject to network impairment condition (s)), the text generated during this calibration procedure may also be referred to as variant text. In some embodiments, the variant text is a text that would be expected to be received by speech recognition module 240 (*i.e.,* "expected text") if a speech signal corresponding to the speech received in block 305 during calibration were later received over the network during normal operation while the network experienced the same impairment(s) used in block 310. At block 320, method 300 may store an indication of a network impairment condition (used in block 310) along with its corresponding variant or expected text (from block 315) and/or variant speech (from block 305). In some embodiments, speech processing engine 210 may store the expected text/condition pair in speech database 250.

To illustrate the foregoing, consider a speech signal received in block 305 which, in the absence of any network impairments, would result in the following text once processed by speech recognition module 240: "The customized ring back tone feature is now active callers will hear the following ring tone." Speech processing engine 310 may add one or more different impairment condition(s) to the speech signal at block 310, and obtain a corresponding variant or expected text at block 315, as shown in Table I below:

TABLE I

| IMPAIRMENT CONDITION | VARIANT OR EXPECTED TEXT |
|---|---|
| Jitter Buffer Delay of 1ms | The customers the ring back tone feature is now active caller is will hear the following ring tone |
| Jitter Buffer Delay of 5ms | The customers the ring back tone feature is now active caller is will hear the following ring tone |
| Jitter Buffer Delay of 10ms | The customers the ring back tone feature is now active caller is will hear the following ring tone |
| Delay of 10ms | The customers the ring back tone feature is now active caller is will hear the following ring tone |
| Delay of 100ms | The customers the ring back tone feature is now active caller is will hear the following ring tone |
| Delay of 1000ms | The customers the ring back tone feature is now active caller is will hear the following ring tone |
| Packet Loss of 1% | The customers the ring back tone feature is now active caller is will hear the following ring tone |
| Packet Loss of 5% | The customers the ring the tone feature is now active caller is will hear the following ring tone |
| Packet Loss of 10% | The customer is the ring back tone feature is now active call there's will hear the following ring tone |
| Noise Level of 10dB | The customer is the ring the tone feature is now then the caller is a the following ring tone |
| Noise Level of 15dB | The customer is a the feature is now a caller the them following ring tone |

In some implementations, the original speech signal may be processed with the same impairment condition a number of times (*e.g.*, 10 times), and the output of speech recognition module 240 may be averaged to yield corresponding variant texts. It may be noted from Table I that, in some cases, different network impairment conditions may produce the same variant text. Generally however, different impairments may potentially result in very different variant texts (*e.g.*, compare the recognized text with a noise level of 15dB, a packet loss of 10%, and a delay of 10ms). It should be understood that, although Table I lists individual impairment conditions, those conditions may be combined to produce additional variant texts (*e.g.*, Noise level of 10dB *and* packet loss of 5%, delay of 5ms and jitter of 5ms, etc.). Moreover, the conditions shown in Table I are merely illustrative, and many other impairment conditions and/or degrees of impairment may be added to a given speech signal such as, for example, low-bandwidth encoding, low-bandwidth decoding, and the codec chain(s) of G.711, G.721, G.722, G.723, G.728, G.729, GSM-HR, etc.

In some embodiments, in addition to simulated network impairment conditions, speech processing engine 210 may store recognition results of actual speech samples in database 250. FIGURE 3B illustrates a method of creating variant or expected texts based on actual network impairment conditions, according to some embodiments. At block 325, speech processing engine 210 may identify a mistakenly recognized and/or unrecognized speech or audio signal. For example, the speech identified at block 325 may have actually traveled across network 140 under known or unknown impairment conditions. If the speech is incorrectly recognized or unrecognized by speech processing engine 210, a human user may perform manual review to determine whether the received speech matches an expected speech. For example, the user may actually listen to a recording of the received speech in order to evaluate it.

If a user in fact recognizes the speech or audio signal mistakenly recognized and/or unrecognized by speech processing engine 210, block 330 may convert the speech to text and add the audio/expected text pair to speech database 250. In some cases, speech probe 100 may be able to estimate the impairment condition, and may associate the condition with the variant or expected text. Otherwise, the expected text may be added to database 250 as having an unknown network impairment condition.

In sum, a speech calibration procedure may be performed as follows. First, speech recognition engine 240 may transcribe an original audio or speech signal without the signal being subject to a network impairment condition. In some cases, the initial transcription without impairment may be used as an expected text. Then, the same original audio or speech signal may be processed to simulate one or more network impairment conditions, and each condition may have a given degree of impairment. These variant audio or speech signals may again be transcribed by speech recognition engine 240 to generate variant or expected texts, each such expected text corresponding to a given network impairment condition. On site, actual speech samples may be collected under various impairment conditions and transcribed to produce additional variant or expected texts. Moreover, mistakenly processed audio or speech signals may be manually recognized and their variant or expected texts considered in future speech identification processes. As such, the methods of FIGURES 3A and 3B may provide adaptive algorithms to increase and tune the speech identification capabilities of speech processing engine 210 over time at the verbal sentence level. Moreover, once a calibration procedure has been performed, speech recognition engine 240 may be capable of identifying impaired or variant speech as described in more detail below with respect to FIGURES 5 and 6.

FIGURE 4 is a block diagram of elements 400 stored in speech-processing database 250 according to some embodiments. As illustrated, speech data 410 may be stored corresponding to a given speech signal A-N. In some cases, an indication or identification of the speech signal (*e.g.*, an ID string, etc.) may be stored. Additionally or alternatively, the actual speech signal (*e.g.*, in the time and/or frequency domain) may be referenced by each corresponding entry 410. For each speech 410, a given set 440 of network impairment conditions 430-A and corresponding expected or variant text 430B may be stored. For example, "Speech A" may point to condition/expected text pair 430A-B and vice-versa. Moreover, any number of condition/expected text pairs 420 may be stored for each corresponding speech 410.

In some implementations, database 250 may be sparse. For example, in case a given speech (*e.g.*, Speech A) is used to generate the condition/expected text pairs shown in Table I, it may be noted that many entries would be identical (*e.g.*, all jitter buffer delays, all delays, and packet loss of 1% result in the same variant text). Therefore, rather than storing the same condition/expected text several times, database 250 may associate two or more conditions with the a single instance of the same expected or variant text. Furthermore, in cases where different speech signals are sufficiently similar to each other such that there may be an overlap between condition/expected text pairs (*e.g.* across Speech A and Speech B), database 250 may also cross-reference those pairs, as appropriate.

FIGURE 5 is a flowchart of a method of identifying speech under impaired network conditions. In some embodiments, method 500 may be performed by speech processing engine 210, for instance, after a calibration procedure described above. In this example, there may be one expected speech under consideration, and that expected speech may be associated with a number of expected or variant texts resulting from the calibration procedure. As such, method 500 may be employed, for example, in applications where the task at hand is determining whether a received speech or audio signal matches the expected speech.

At block 505, speech processing engine 210 may receive a speech or audio signal. At block 510, speech recognition module 240 may transcribe or convert the received speech into text. At block 515, speech processing engine 210 may select a given network impairment condition entry in database 250 that is associated with a variant or expected text. At block 520, speech processing engine 210 may determine or identify matching words or terms between the text and the variant or expected text corresponding to the network impairment condition. Then, at block 525, speech processing engine 210 may calculate a matching score as between the text and the variant or expected text.

At block 530, method 500 may determine whether the matching score meets a threshold value. If so, block 535 identifies the speech received in block 505 as the expected speech. Otherwise, block 540 determines whether the condition data selected at block 515 is the last (or only) impairment condition data available. If not, control returns to block 515 where a subsequent set of impairment condition data/variant text is selected for evaluation. Otherwise, the speech received in block 505 is flagged as not matching the expected speech in block 545. Again, to the extent the received speech does not match the expected speech, a user may later manually review the flagged speech to determine whether it does in fact match the expected speech. If it does, then the text obtained in block 510 may be added to database 250 as additional impairment condition data to adaptively calibrate or tune the speech identification process.

With respect to block 520, method 500 may identify matching words or terms between the text and the variant or expected text. In some cases, method 500 may flag only words that match symbol-by-symbol (e.g., character-by-character or letter-by-letter). In other cases, however, method 500 may implement a fuzzy logic operation to determine that a first term in the text and a second term in the stored text are a match, despite not being identical to each other (*i.e.,* not every character in the first term matches corresponding characters in the second term). As the inventors hereof have recognized, speech recognition module 240 may often be unable transcribe speech or audio with perfect accuracy. For example, speech corresponding to the following original text: "call waiting is now deactivated" may be transcribed by module 240 as: "call waiting is now activity." As another example, speech corresponding to: "all calls would be forwarded to the attendant" may be converted to text as: "all call to be forward to the attention."

In these examples, the word "activated" is transcribed into "activity," "forwarded" is converted to "forward," and "attendant" is transcribed into "attention." In other words, although the output of module 240 would be expected to include a certain term, other terms with same root and similar pronunciation resulted. Generally speaking, that is because module 240 may commit recognition errors due to similarly between the different words and their corresponding acoustic models. Accordingly, in some embodiments, similar sounding terms or audio that are expressed differently in text form may nonetheless be recognized as a match using fuzzy logic.

An example of such logic may include a rule such that, if a leading number of characters in the first and second terms match each other (e.g., first 4 letters) and that a number of unmatched characters in the first and second terms is smaller than a predetermined value (e.g., 5), then the first and second terms constitute a match. In this case, the words "create and "creative," "customize" and "customer," "term" and "terminate," "participate" and "participation," "dial" and "dialogue," "remainder" and "remaining," "equipped" and "equipment," "activated" and "activity," etc. may be considered matches (although not identical to each other). In another example, another rule may provide that if a leading number of characters in the first and second terms match each other and the leading number of characters is greater than a predetermined value (e.g., first 3 symbols or characters match), then the first and second terms are also a match. In this case, the words "you" and "your," "Phillip" and "Philips," "park" and "parked," "darl" and "darling," etc. may be considered matches. Similarly, the words "provide," "provider," and "provides" may be a match, as may be the words "forward," "forwarded," and "forwarding."

In certain implementations, two or more fuzzy logic rules may be applied in combination at block 520 using a suitable Boolean operator (e.g., AND, OR, etc.). Additionally or alternatively, matches may be identified without regard to the order in which they appear in the text and variant or expected texts (e.g., the second term in the text may match the third term in the variant text). Additionally or alternatively, any word or term in both the text and the variant or expected text may be matched only once.

Returning to block 525, speech processing engine 210 may calculate a matching score as between the text and the variant or expected text. For example, method 500 may include calculating a first sum of a first number of characters of matching terms in the text and in the variant or expected text, a second sum of a total number of characters in the text and in the variant or expected text, and divide the first sum by the second sum as follows:

$$\text{Match Score} = (MatchedWordLengthOfReceivedText + MatchedWordLengthOfExpectedText) /$$

$$(TotalWordLengthOfReceivedText + TotalWordLengthOfExpectedText).$$

For example, assume that the received speech is converted to text by module 240 thus resulting in the following received text (number of characters in parenthesis): "You(3) were(4) count(5) has(3) been(4) locked(6)." Also, assume that the stored variant or expected text against which the received text is being compared is as follows: "Your(4) account (7) has(3) been(4) locked(6)." Further, assume that the second fuzzy logic rule described above is used to determine whether words in the received and variant texts match each other (i.e., there is match if leading overlap letter match and the match length is equal to or greater than 3). In this scenario, the match score may be calculated as:

$$\text{Matching Score} = \{[you(3)+has(3)+been(4)+locked(6)]+[your(4)+has(3)+been(4)+locked(6)]\} /$$

$$\{[You(3)+were(4)+count(5)+has(3)+been(4)+locked(6)] + [Your(4)+account(7)+$$

$$has(3)+been(4)+locked(6)] = 33/49 = 67.3\%.$$

At block 530, if the calculated score (i.e., 67.3%) matches the threshold value (e.g., 60%), then the received text may be considered a match of the variant text and the received speech may be identified as the variant speech associated with the variant text. On the other hand, if the threshold value is not met by the calculated score (e.g., the threshold is 80%), then the received text may be flagged as a non-match.

FIGURE 6 is a flowchart of another method of identifying speech under impaired network conditions. As before, method 600 may be performed by speech processing engine 210, for instance, after a calibration procedure. At block 605, method 600 may receive a speech signal. At block 610, method 600 may convert the speech to text. At block 615, method 600 may select one of a plurality of stored speeches (e.g., "Speeches A-N" 410 in FIGURE 4). Then, at block 620, method 600 may select network impairment condition data (e.g., an indication of a condition and an associated variant or expected text) corresponding to the selected speech (e.g., in the case of "speech "A," one of condition/text pairs 440 such as 430A and 430B).

At block 625, method 600 may identify matching words or terms between the received text and the selected variant text, for example, similarly as in block 520 in FIGURE 5. At block 630, method 600 may calculate a matching score for the texts being compared, for example, similarly as in block 525 of FIGURE 5. At block 635, method 600 may determine whether the examined condition data (e.g., 430A-B) is the last (or only) pair for the speech selected in block 615. If not, method 600 may return to block 620 and continue scoring matches between the received text and subsequent variant text stored for the selected speech. Otherwise, at block 640, method 600 may determine whether the examined speech is the last (or only) speech available. If not, method 600 may return to block 615 where a subsequent speech (e.g., "Speech B") may be selected to continue the analysis. Otherwise, at block 645, method 600 may compare all calculated scores for each variant text of each speech. In some embodiments, the speech associated with the variant text having a highest matching score with respect to the received text may be identified as corresponding to the speech received in block 605.

FIGURE 7 is a flowchart of a method of identifying a network impairment based on received speech. Again, method 700 may be performed by speech processing engine 210, for instance, after a calibration procedure. In this example, blocks 705-730 may be similar to blocks 505-525 and 540 of FIGURE 5, respectively. At block 735, however, method 700 may evaluate calculated matching scores between the received text and each variant text, and it may identify the variant text with highest score. Method 700 may then diagnose a network by identifying a network impairment condition associated with the variant text with highest score. In cases where there is a many-to-one correspondence between impairment conditions and a single variant text (*e.g.*, rows 1-7 of Table I), block 735 may select a set of variant texts (*e.g.*, with top 5 or 10 scores) and identify possible impairment conditions associated with those texts for further analysis.

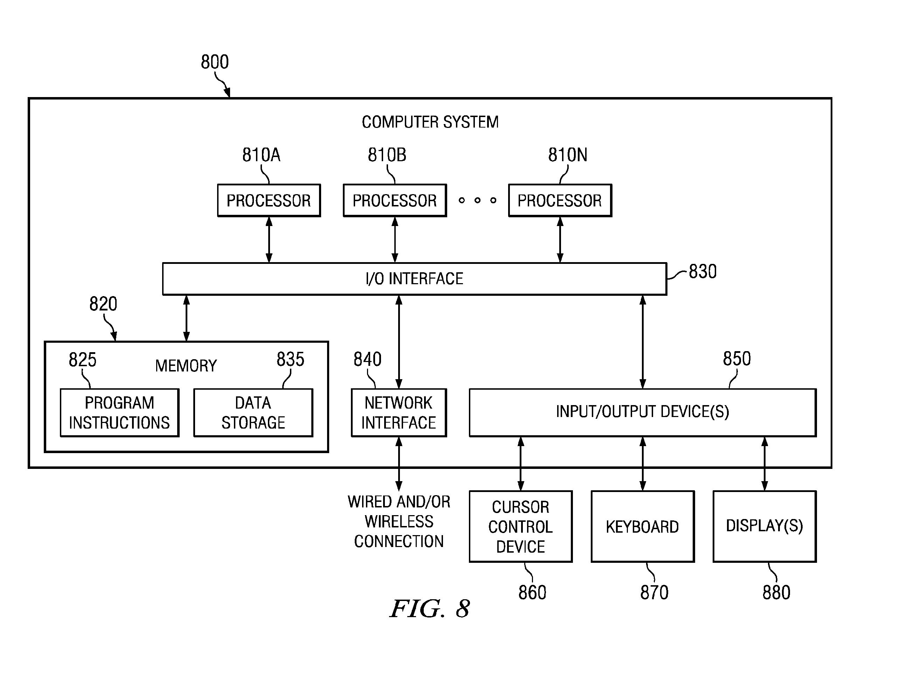

Embodiments of speech probe 100 may be implemented or executed by one or more computer systems. One such computer system is illustrated in FIGURE 8. In various embodiments, computer system 800 may be a server, a mainframe computer system, a workstation, a network computer, a desktop computer, a laptop, or the like. For example, in some cases, speech probe 100 shown in FIGURE 1 may be implemented as computer system 800. Moreover, one or more of test units 110, IVR server 120, or announcement endpoints 130 may include one or more computers in the form of computer system 800. As explained above, in different embodiments these various computer systems may be configured to communicate with each other in any suitable way, such as, for example, via network 140.

As illustrated, computer system 800 includes one or more processors 810 coupled to a system memory 820 via an input/output (I/O) interface 830. Computer system 800 further includes a network interface 840 coupled to I/O interface 830, and one or more input/output devices 850, such as cursor control device 860, keyboard 870, and display (s) 880. In some embodiments, a given entity (*e.g.*, speech probe 100) may be implemented using a single instance of computer system 800, while in other embodiments multiple such systems, or multiple nodes making up computer system 800, may be configured to host different portions or instances of embodiments. For example, in an embodiment some elements may be implemented via one or more nodes of computer system 800 that are distinct from those nodes implementing other elements (*e.g.*, a first computer system may implement speech processing engine 210 while another computer system may implement speech recognition module 240).

In various embodiments, computer system 800 may be a single-processor system including one processor 810, or a multi-processor system including two or more processors 810 (*e.g.*, two, four, eight, or another suitable number). Processors 810 may be any processor capable of executing program instructions. For example, in various embodiments, processors 810 may be general-purpose or embedded processors implementing any of a variety of instruction set architectures (ISAs), such as the x86, POWERPC®, ARM®, SPARC®, or MIPS® ISAs, or any other suitable ISA. In multi-processor systems, each of processors 810 may commonly, but not necessarily, implement the same ISA. Also, in some embodiments, at least one processor 810 may be a graphics processing unit (GPU) or other dedicated graphics-rendering device.

System memory 820 may be configured to store program instructions and/or data accessible by processor 810. In various embodiments, system memory 820 may be implemented using any suitable memory technology, such as static random access memory (SRAM), synchronous dynamic RAM (SDRAM), nonvolatile/Flash-type memory, or any other type of memory. As illustrated, program instructions and data implementing certain operations, such as, for example, those described herein, may be stored within system memory 820 as program instructions 825 and data storage 835, respectively. In other embodiments, program instructions and/or data may be received, sent or stored upon different types of computer-accessible media or on similar media separate from system memory 820 or computer system 800. Generally speaking, a computer-accessible medium may include any tangible storage media or memory media such as magnetic or optical media-*e.g.*, disk or CD/DVD-ROM coupled to computer system 800 via I/O interface 830. Program instructions and data stored on a tangible computer-accessible medium in non-transitory form may further be transmitted by transmission media or signals such as electrical, electromagnetic, or digital signals, which may be conveyed via a communication medium such as a network and/or a wireless link, such as may be implemented via network interface 840.

In an embodiment, I/O interface 830 may be configured to coordinate I/O traffic between processor 810, system memory 820, and any peripheral devices in the device, including network interface 840 or other peripheral interfaces, such as input/output devices 850. In some embodiments, I/O interface 830 may perform any necessary protocol, timing or other data transformations to convert data signals from one component (e.g., system memory 820) into a format suitable for use by another component (e.g., processor 810). In some embodiments, I/O interface 830 may include support for devices attached through various types of peripheral buses, such as a variant of the Peripheral Component Interconnect (PCI) bus standard or the Universal Serial Bus (USB) standard, for example. In some embodiments, the function of I/O interface 830 may be split into two or more separate components, such as a north bridge and a south bridge, for example. In addition, in some embodiments some or all of the functionality of I/O interface 830, such as an interface to system memory 820, may be incorporated directly into processor 810.

Network interface 840 may be configured to allow data to be exchanged between computer system 800 and other devices attached to network 115, such as other computer systems, or between nodes of computer system 800. In various embodiments, network interface 840 may support communication via wired or wireless general data networks, such as any suitable type of Ethernet network, for example; via telecommunications/telephony networks such as analog voice networks or digital fiber communications networks; via storage area networks such as Fiber Channel SANs, or via any other suitable type of network and/or protocol.

Input/output devices 850 may, in some embodiments, include one or more display terminals, keyboards, keypads, touch screens, scanning devices, voice or optical recognition devices, or any other devices suitable for entering or retrieving data by one or more computer system 800. Multiple input/output devices 850 may be present in computer system 800 or may be distributed on various nodes of computer system 800. In some embodiments, similar input/output devices may be separate from computer system 800 and may interact with one or more nodes of computer system 800 through a wired or wireless connection, such as over network interface 840.

As shown in FIGURE 8, memory 820 may include program instructions 825, configured to implement certain embodiments described herein, and data storage 835, comprising various data accessible by program instructions 825. In an embodiment, program instructions 825 may include software elements of embodiments illustrated in FIGURE 2. For example, program instructions 825 may be implemented in various embodiments using any desired programming language, scripting language, or combination of programming languages and/or scripting languages (*e.g.*, C, C++, C#, JAVA®, JAVASCRIPT®, PERL®, etc). Data storage 835 may include data that may be used in these embodiments. In other embodiments, other or different software elements and data may be included.

A person of ordinary skill in the art will appreciate that computer system 800 is merely illustrative and is not intended to limit the scope of the disclosure described herein. In particular, the computer system and devices may include any combination of hardware or software that can perform the indicated operations. In addition, the operations performed by the illustrated components may, in some embodiments, be performed by fewer components or distributed across additional components. Similarly, in other embodiments, the operations of some of the illustrated components may not be performed and/or other additional operations may be available. Accordingly, systems and methods described herein may be implemented or executed with other computer system configurations.

The various techniques described herein may be implemented in software, hardware, or a combination thereof. The order in which each operation of a given method is performed may be changed, and various elements of the systems illustrated herein may be added, reordered, combined, omitted, modified, etc. Various modifications and changes may be made as would be clear to a person of ordinary skill in the art having the benefit of this specification. It is intended that the invention(s) described herein embrace all such modifications and changes and, accordingly, the above description should be regarded in an illustrative rather than a restrictive sense.

**Claims**

1.  A method, comprising:

    performing, by one or more computer systems,
    receiving speech transmitted over a network;
    causing the speech to be converted to text; and
    identifying the speech as predetermined speech in response to the text matching a stored text associated with the predetermined speech, the stored text having been obtained by subjecting the predetermined speech to a network impairment condition.

2.  The method of claim 1, wherein the speech includes a signal generated by an Interactive Voice Response (IVR) system.

3.  The method of claim 1, wherein the speech includes an audio command provided by a user remotely located with respect to the one or more computer systems, the audio command configured to control the one or more computer systems.

4.  The method of claim 1, wherein the network impairment condition includes at least one of: noise, packet loss, delay, jitter, congestion, low-bandwidth encoding, or low-bandwidth decoding.

5.  The method of claim 1, wherein identifying the speech as the predetermined speech further comprises:

identifying one or more terms within the text that match one or more terms within the stored text;
calculating a matching score between the text and the stored text based, at least in part, upon the identification of the one or more terms; and
determining that the text matches the stored text in response to the matching score meeting a threshold value.

6. The method of claim 5, wherein identifying the one or more terms within the text that match the one or more terms within the stored text further comprises:

applying fuzzy logic to terms in the text and in the stored text.

7. The method of claim 6, wherein applying the fuzzy logic further comprises:

comparing a first term in the text against a second term in the stored text without regard for an ordering of terms in the first or second texts.

8. The method of claim 7, wherein applying the fuzzy logic further comprises:

determining that any term in the text matches, at most, one other term in the stored text.

9. The method of claim 6, wherein applying the fuzzy logic further comprises determining that a first term in the text and a second term in the stored text are a match, despite not being identical to each other, in response to:

a leading number of characters in the first and second terms matching each other; and
a number of unmatched characters in the first and second terms being smaller than a predetermined value.

10. The method of claim 6, wherein applying the fuzzy logic further comprises determining that a first term in the text and a second term in the stored text are a match, despite not being identical to each other, in response to:

a leading number of characters in the first and second terms matching each other; and
the leading number of characters being greater than a predetermined value.

11. The method of claim 5, wherein calculating the matching score between the text and the stored text further comprises:

calculating a first sum of a first number of characters of the one or more terms within the text that match the one or more terms within the stored text and a second number of characters of the one or more terms within the stored text that match the one or more terms within the text;
calculating a second sum of a total number of characters in the text and the stored text; and
dividing the first sum by the second sum.

12. The method of claim 1, further comprising, prior to identifying the speech signal as the predetermined speech:

creating a variant speech signal by subjecting the predetermined speech to the network impairment condition;
causing the variant speech signal to be converted to variant text; and
storing the variant text as the stored text, the stored text associated with the network impairment condition.

13. A computer system, comprising:

a processor; and
a memory coupled to the processor, the memory configured to store program instructions executable by the processor to cause the computer system to:

identify a text resulting from a speech-to-text conversion of a speech signal received over a telecommunications network;
calculate, for each of a plurality of stored texts, a score that indicates a degree of matching between a given stored text and the received text, each of the plurality of stored texts corresponding to a speech-to-text conversion of a predetermined speech subject to an impairment condition of the telecommunications network; and
select a stored text with highest score among the plurality of stored texts as matching the received text.

**14.** The computer system of claim 13, the program instructions further executable by the processor to cause the computer system to:

identify the speech signal as the predetermined speech corresponding to the selected stored text.

**15.** The computer system of claim 13, wherein to calculate the score, the program instructions are further executable by the processor to cause the computer system to:

calculate a first sum of a first number of characters of the one or more terms of the text that match the one or more terms of the given stored text and a second number of characters of the one or more terms of the given stored text that match the one or more terms of the text;
calculate a second sum of a total number of characters of the text and of the given stored text; and
divide the first sum by the second sum.

**16.** The computer system of claim 15, wherein to calculate the score, the program instructions are further executable by the processor to cause the computer system to determine that a first term in the received text and a second term in the given stored text constitute a match, although not identical to each other, in response to:

a leading number of characters in the first and second terms matching each other; and
a number of unmatched characters in the first and second terms being smaller than a predetermined value.

**17.** The computer system of claim 15, wherein to calculate the score, the program instructions are further executable by the processor to cause the computer system to determine that a first term in the received text and a second term in the given stored text constitute a match, although not identical to each other, in response to:

a leading number of characters in the first and second terms matching each other; and
the leading number of characters being greater than a predetermined value.

**18.** The computer system of claim 15, the program instructions further executable by the processor to cause the computer system to:

create variant speeches by subjecting an original speech to different impairment conditions of the telecommunications network;
convert the variant speeches into variant texts; and
store the variant texts as the plurality of stored texts, each of the plurality of stored texts associated with a respective one of the different impairment conditions.

**19.** A tangible computer-readable storage medium having program instructions stored thereon that, upon execution by a processor within a computer system, cause the computer system to:

create a variant speech by subjecting an original speech to an actual or simulated impairment condition of a telecommunications network;
transcribe the variant speech signal into a variant text; and
store the variant text, the variant text associated with an indication of the impairment condition.

**20.** The tangible computer-readable storage medium of claim 19, wherein the program instructions, upon execution by the processor, further cause the computer system to:

transcribe a speech signal received over a network into text; and
identify the speech signal as matching the original speech in response to the text matching the variant text.

*FIG. 1*

*FIG. 2*

300

| RECEIVE AND/OR IDENTIFY SPEECH | ─305 |

↓

| CREATE AND/OR SIMULATE CONDITION | ─310 |

↓

| CONVERT TO TEXT | ─315 |

↓

| STORE CONDITION/ EXPECTED TEXT PAIR IN SPEECH DATABASE | ─320 |

*FIG. 3A*

300

| IDENTIFY MISTAKENLY RECOGNIZED AND/OR UNRECOGNIZED AUDIO | 325─ |

↓

| 330─ | CONVERT TO TEXT |

↓

| 335─ | STORE AUDIO/ EXPECTED TEXT PAIR IN SPEECH DATABASE |

*FIG. 3B*

500

| RECEIVE SPEECH | ─505 |

↓

| CONVERT TO TEXT | ─510 |

↓

| SELECT CONDITION DATA | ─515 |

↓

| DETERMINE MATCHING WORDS | ─520 |

↓

| CALCULATE MATCHING SCORE | ─525 |

↓

SCORE MEETS THRESHOLD? ─530 — YES → | IDENTIFY SPEECH AS A MATCH | 535

NO ↓

LAST CONDITION ? ─540 — NO

YES ↓

| FLAG AS "NO MATCH" | ─545 |

*FIG. 5*

400

430-A

CONDITION 1

EXPECTED TEXT 1

430-B

SPEECH A

CONDITION 2

EXPECTED TEXT 2

440

CONDITION m

EXPECTED TEXT m

CONDITION 1

EXPECTED TEXT 1

SPEECH B

CONDITION 2

EXPECTED TEXT 2

CONDITION m

EXPECTED TEXT m

CONDITION 1

EXPECTED TEXT 1

SPEECH N

CONDITION 2

EXPECTED TEXT 2

410

CONDITION m

EXPECTED TEXT m

*FIG.4*

420

*FIG. 6*

*FIG. 7*

EP 2 620 939 A1

800

COMPUTER SYSTEM

810A     810B                    810N

PROCESSOR   PROCESSOR   ∘ ∘ ∘   PROCESSOR

I/O INTERFACE                    830

820

825   MEMORY   835

840                                        850

PROGRAM
INSTRUCTIONS     DATA
STORAGE          NETWORK
INTERFACE        INPUT/OUTPUT DEVICE(S)

WIRED AND/OR
WIRELESS
CONNECTION       CURSOR
CONTROL
DEVICE          KEYBOARD          DISPLAY(S)

860              870              880

*FIG. 8*

Europäisches
Patentamt
European
Patent Office
Office européen
des brevets

# EUROPEAN SEARCH REPORT

Application Number

EP 13 15 2708

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2007/067172 A1 (LEE MINKYU [US] ET AL) 22 March 2007 (2007-03-22) * abstract * * * page 1, paragraph [0008] * * page 2, paragraph [0013] * * figures 1,2 * | 1-20 | INV. G10L15/26 |
| A | CARLOS D NOCITO ET AL: "Monitoring jitter and packet loss in VoIP networks using speech quality features", CONSUMER COMMUNICATIONS AND NETWORKING CONFERENCE (CCNC), 2011 IEEE, IEEE, 9 January 2011 (2011-01-09), pages 685-686, XP031866019, DOI: 10.1109/CCNC.2011.5766571 ISBN: 978-1-4244-8789-9 * abstract * * * page 685, right-hand column, last paragraph - page 686, right-hand column, paragraph 2 * * tables 1-3 * | 1,13 | |
| A | MEDDAHI A ET AL: "''Packet-E-Model'': E-Model for VoIP quality evaluation", COMPUTER NETWORKS, ELSEVIER SCIENCE PUBLISHERS B.V., AMSTERDAM, NL, vol. 50, no. 15, 18 October 2006 (2006-10-18), pages 2659-2675, XP028042070, ISSN: 1389-1286, DOI: 10.1016/J.COMNET.2005.10.008 [retrieved on 2006-10-18] * abstract * * * page 2660, paragraph [2.2 Factors affecting voice quality] * * page 2666, paragraph [7. Implementation] * * figures 1,10 * | 1,13 | TECHNICAL FIELDS SEARCHED (IPC) G10L |

The present search report has been drawn up for all claims

| Place of search | Date of completion of the search | Examiner |
|---|---|---|
| Munich | 26 April 2013 | Greiser, Norbert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                   EP 13 15 2708

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2013

| Patent document cited in search report | Publication date | Patent family member(s) | Publication date |
|---|---|---|---|
| US 2007067172 A1 | 22-03-2007 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201210020265